**Europäisches Patentamt**

**European Patent Office**

**Office européen des brevets**

(19)

(11) Veröffentlichungsnummer: **0 685 396 A1**

## (12) EUROPÄISCHE PATENTANMELDUNG

(21) Anmeldenummer: **95107101.8**

(22) Anmeldetag: **11.05.95**

(51) Int. Cl.⁶: $B65B\ 43/48$, B65G 25/02

(30) Priorität: **03.06.94 DE 4419498**

(43) Veröffentlichungstag der Anmeldung:
**06.12.95 Patentblatt 95/49**

(84) Benannte Vertragsstaaten:
**BE DE FR GB IT NL**

(71) Anmelder: **Ludwig Schwerdtel GmbH.**
**Boschstrasse 8**
**D-85757 Karlsfeld (DE)**

(72) Erfinder: **Bussmann, Matthias**
**Freischützstrasse 63**
**D-81927 München (DE)**
Erfinder: **Hammerl, Norbert**
**Dachauer Strasse 16**
**D-85238 Petershausen (DE)**
Erfinder: **Fleischer, Horst**
**Schillerstrasse 32**
**D-85221 Dachau (DE)**

(74) Vertreter: **Rau, Manfred, Dr. Dipl.-Ing. et al**
**Rau, Schneck & Hübner**
**Patentanwälte**
**Königstrasse 2**
**D-90402 Nürnberg (DE)**

(54) **Fördervorrichtung zum taktweisen Transport von Behältern.**

(57) Eine Fördervorrichtung zum taktweisen Transport von Behältern (36) weist ein Gestell (1), eine gestellfeste Auflage (39) für die Behälter (36) und einen horizontal und vertikal auf einer Rechteck-Bahn bewegbaren, mit Mitnehmern (37) für die Behälter (36) versehenen Horizontal-Förder-Schlitten (7) auf. Der Antrieb des Horizontal-Förder-Schlittens (7) auf einer Rechteck-Bahn erfolgt mittels einer drehantreibbaren Nockenscheibe (14) an deren Umfang (19) einerseits ein Vertikaltrieb und andererseits ein um 90° hiergegen versetzter Horizontaltrieb für den Horizontal-Förder-Schlitten (7) sich abstützen.

FIG.1

EP 0 685 396 A1

Die Erfindung betrifft eine Fördervorrichtung nach dem Oberbegriff des Anspruches 1.

Eine derartige Fördervorrichtung ist aus der EP 0 290 747 B1 (entsprechend US-Patent 4 874 022) bekannt. Sie wird dort in einer Kartuschen-Füll- und Verschließ-Maschine eingesetzt. Der Vertikaltrieb für den rechenartig ausgebildeten Horizontal-Förder-Schlitten ist hierbei durch zwei vertikal angeordnete pneumatisch beaufschlagbare Arbeitszylinder gebildet, die den horizontal verschiebbaren Schlitten vertikal anheben, wodurch Kartuschen von einer Auflage abgehoben werden. Durch einen im wesentlichen horizontal angeordneten pneumatisch beaufschlagbaren Arbeitszylinder wird der Horizontal-Förder-Schlitten mit den Kartuschen horizontal um einen Förderhub vorgegebener Länge weitertransportiert. Anschließend werden die vertikal angeordneten pneumatisch beaufschlagbaren Arbeitszylinder wieder entlastet, so daß der Schlitten abgesenkt und die Kartuschen wieder auf der Auflage abgesetzt werden. Der rechenartig ausgebildete Schlitten wird dann mittels des horizontal angeordneten Arbeitszylinders wieder in seine rückwärtige Ausgangsstellung zurückbewegt. Mit diesen pneumatisch beaufschlagbaren Arbeitszylindern wird eine Rechteck-Bewegung des Horizontal-Förder-Schlittens erzeugt, wobei die Kartuschen getaktet jeweils um einen vorgegebenen horizontalen Förderhub weitertransportiert werden. Die geschilderten Antriebe sind in ihrem Beschleunigungs- und Bremsverhalten zu hart. Es erfolgt jeweils ein abruptes Absetzen der Kartuschen auf den Auflagen, so daß die Kartuschen erst nach einer gewissen Zeit mit Sicherheit ruhig liegen. Wenn die Kartuschen nicht ruhig liegen, so kann dies beispielsweise in einer Arbeitsstation zu Schwierigkeiten führen, in der in die bereits mit pastösem Material gefüllten Kartuschen Auspreßkolben eingesetzt werden. Im übrigen macht der Antrieb mittels der pneumatisch beaufschlagbaren Arbeitszylinder hohe Taktzeiten notwendig.

Auch bei Dosen-Füll- und Verschließ-Maschinen, wie sie beispielsweise aus der EP 0 019 646 B1 (entsprechend US-Patent 4 221 102) bekannt sind, in denen flüssige Farben od.dgl. in Dosen abgefüllt werden, sind die geschilderten taktweise arbeitenden Fördervorrichtungen von Nachteil, da durch das abrupte Beschleunigen bzw. Abbremsen die niedrigviskosen Flüssigkeiten über den Rand der Dose schwappen können.

Aus der DE-OS 19 40 287 ist eine automatische Abfüll- und Verschließmaschine bekannt. Der Vertikalantrieb erfolgt hierbei mittels zweier Nokkenscheiben. Der Horizontalantrieb erfolgt mittels eines gesonderten Kurbeltriebes. Diese Ausgestaltung ist zumindest sehr aufwendig.

Aus der DE 34 01 704 C1 ist eine Vorschubeinrichtung zum schrittweisen Werkstücktransport bekannt, bei der im Abstand voneinander Greiferschienen vorgesehen sind, die in Vorschubrichtung gemeinsam vor- und zurückbewegbar sind und die quer zu ihrer Längserstreckung gegenläufig antreibbar sind. Der Antrieb der Greiferschienen ist von einer einzigen umlaufend angetriebenen Kurvenscheibe abgeleitet.

Der Erfindung liegt die Aufgabe zugrunde, eine taktweise arbeitende Fördervorrichtung der gattungsgemäßen Art so auszugestalten, daß mit einfachen Mitteln weiche Förderbewegungen bei niedrigen Taktzeiten erreicht werden.

Diese Aufgabe wird erfindungsgemäß durch die Merkmale im Kennzeichnungsteil des Anspruches 1 gelöst. Der Kern der Erfindung liegt darin, daß der Horizontaltrieb und der Vertikaltrieb des Horizontal-Förder-Schlittens von mindestens einer Nockenscheibe abgeleitet werden, mittels derer eine Rechteck-Bewegung des Horizontal-Förder-Schlittens erzeugt wird. Die Nockenflanken der mindestens einen Nockenscheibe können so gestaltet werden, daß am Beginn einer Bewegung und am Ende einer Bewegung jeweils die Beschleunigung bzw. die Abbremsung sehr weich erfolgt. Dazwischen kann mit hoher Geschwindigkeit gefahren werden. Die Behälter, beispielsweise Kartuschen oder Dosen liegen bzw. stehen am Ende eines Förderhubes ruhig, so daß sich sofort ein Arbeitsvorgang anschließen kann. Die Vertikalbewegung und die Horizontalbewegung werden mit einem Phasenversatz von 90° von derselben Nokkenscheibe abgeleitet. Es ist ausgeschlossen, daß durch eine Störung gleichzeitig eine Horizontal- und eine Vertikal-Bewegung stattfindet. Es hat sich gezeigt, daß die Taktzeiten gegenüber der bekannten Ausgestaltung um 30% gesenkt werden können.

Zahlreiche vorteilhafte und zum Teil erfinderische Ausgestaltungen ergeben sich aus den Unteransprüchen.

Weitere Merkmale, Vorteile und Einzelheiten der Erfindung ergeben sich im übrigen aus der Beschreibung von Ausführungsbeispielen anhand der Zeichnungen. Es zeigt

Fig. 1    eine Fördervorrichtung nach der Erfindung zum taktweisen Transport von liegenden Kartuschen im Vertikal-Längs-Schnitt,

Fig. 2    eine Draufsicht auf die Vorrichtung nach Fig. 1,

Fig. 3    einen vertikalen Querschnitt durch die Vorrichtung gemäß der Schnittlinie III-III in Fig. 1,

Fig. 4    eine Nockenscheibe in Draufsicht,

Fig. 5    eine Fördervorrichtung nach der Erfindung zum Transport von Dosen in einer Fig. 1 entsprechenden Darstellung,

Fig. 6　eine Fördervorrichtung mit zwei Nokkenscheiben zum taktweisen Transport von liegenden Kartuschen im Vertikal-Längs-Schnitt,

Fig. 7　einen vertikalen Querschnitt durch die Fördervorrichtung nach Fig. 6 gemäß der Schnittlinie VII-VII in Fig. 6 und

Fig. 8　die beiden Nockenscheiben der Fördervorrichtung nach den Fig. 6 und 7 in Draufsicht.

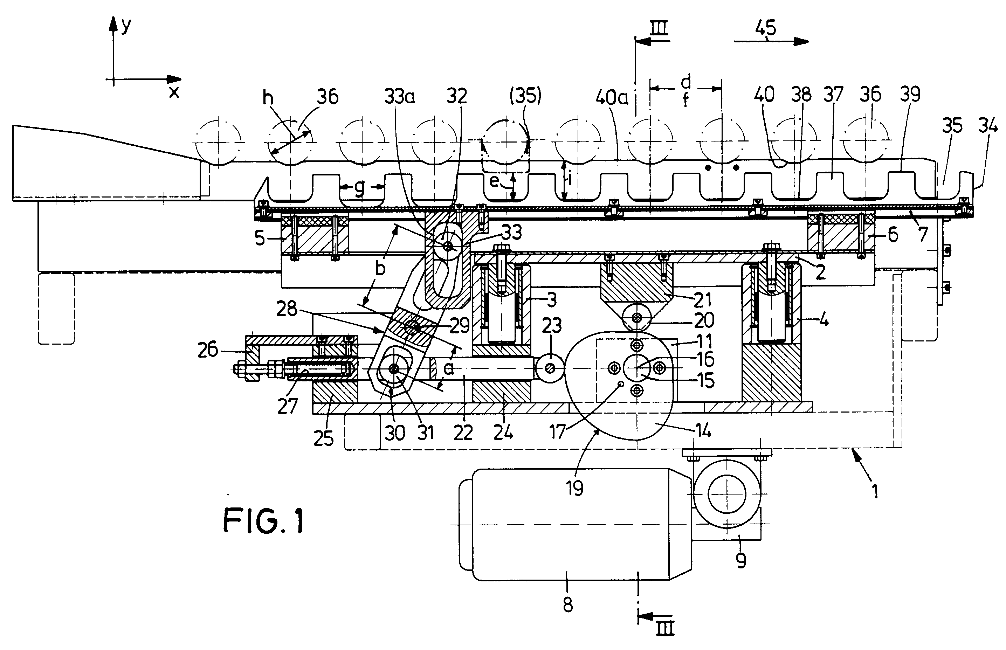

Die in den Fig. 1 bis 3 dargestellte Fördervorrichtung dient zum Transport von Kartuschen durch eine Abfüllstation, in der die Kartuschen mit einem pastösen, also nicht fließfähigen Material gefüllt werden. Sie werden hierbei in liegender, d.h. horizontaler Lage transportiert und gefüllt. Eine solche Abfüllstation, in der diese Fördervorrichtung einsetzbar ist, ist beispielsweise aus der EP 0 290 747 B1 (entsprechend US-Patent 4 874 022) bekannt.

Die Fördervorrichtung weist ein Gestell 1 auf, auf dem ein Vertikal-Schlitten 2 in zwei vertikal angeordneten Schiebelagern 3, 4 in vertikaler y-Richtung verschiebbar geführt ist. Auf dem Vertikal-Schlitten 2 sind zwei horizontale Führungs-Lager 5, 6 angebracht, in denen ein als Rechen ausgebildeter Horizontal-Förder-Schlitten 7 in horizontaler x-Richtung gegenüber dem Vertikal-Schlitten 2 verschiebbar geführt ist.

Am Gestell 1 ist weiterhin ein elektrischer Antriebs-Motor 8 befestigt, der über ein als Schneckengetriebe ausgebildetes Untersetzungsgetriebe 9 und einen Zahnriementrieb 10 eine ebenfalls im Gestell 1 mittels eines Lagers 11 gelagerte Nocken-Antriebswelle 12 antreibt. An der Antriebswelle 12 ist ein Flansch 13 befestigt, auf dem eine Nockenscheibe 14 mittels eines Zentrierzapfens 15 zur Drehachse 16 der Antriebswelle 12 zentriert und mittels eines Zentrierstiftes 17 in ihrer Winkellage zur Antriebswelle 12 positioniert werden kann. Die eigentliche Befestigung am Flansch 13 erfolgt mittels Schrauben 18. Am Umfang 19 der Nockenscheibe 14 liegt eine Rolle 20 an, die in einem Lager 21 an der Unterseite des Vertikal-Schlittens 2 gelagert ist. Demzufolge bewegt sich der Vertikal-Schlitten 2 bei einer Umdrehung der Nockenscheibe 14 entsprechend dem Verlauf ihres Umfangs 19 einmal nach oben und wieder nach unten in die Ausgangsstellung zurück; die Bewegung erfolgt also in y-Richtung.

Gegen den Umfang 19 der Nockenscheibe 14 liegt weiterhin eine in einem Stößel 22 drehbar gelagerte Rolle 23 an. Dieser Stößel 22 ist horizontal zum einen in einem mit dem vertikalen Schiebelager 3 verbundenen horizontalen Schiebelager 24 und zum zweiten in einem hiervon beabstandeten weiteren ortsfest mit dem Gestell 1 verbundenen Schiebelager 25 in x-Richtung verschiebbar gelagert. Dem Schiebelager 25 ist ein Widerlager 26 für eine Rückstellfeder 27 zugeordnet, die sich wiederum gegen den Stößel 22 abstützt und diesen mit seiner Rolle 23 gegen den Umfang 19 der Nockenscheibe 14 drückt. Die Rückstellfeder 27 ist als vorgespannte Druckfeder, beispielsweise als ein Federpaket oder als Schraubenfeder ausgebildet, und zwar in der Weise, daß die Federkennlinie über dem Federweg angenähert waagerecht verläuft. Die auf den Stößel 22 ausgeübte Rückstellkraft ist also über dessen Verschiebeweg weitgehend konstant.

Am Gestell 1 ist weiterhin ein als Doppelhebel 28 ausgebildeter Lenker mittels eines Schwenklagers 29 schwenkbar um eine horizontale, quer zur Verschieberichtung des Stößels 22 und des Vertikal-Schlittens 2, also in z-Richtung, verlaufende Achse schwenkbar gelagert. Ein Ende dieses Doppelhebels 28 ist mittels einer Langlochführung 30 mit einer am Stößel 22 gelagerten Übertragungsrolle 31 gekoppelt. Das andere obere Ende des Doppelhebels 28 ist mit einer drehbar gelagerten Übertragungsrolle 32 versehen, die in einem Widerlager 33 mit Langlochführung 33a abgestützt ist. Dieses Widerlager 33 ist an der Unterseite des Horizontal-Förder-Schlittens 7 angebracht. Bei horizontalen Bewegungen des Stößels 22 aufgrund der Umdrehungen der Nockenscheibe 14 wird der Horizontal-Förder-Schlitten 7 mittels des Doppelhebels 28 jeweils gegensinnig horizontal verschoben. Die vertikale Langlochführung 33a ist hierbei so lang ausgebildet, daß die Vertikalbewegungen des den Horizontal-Förder-Schlitten 7 tragenden Vertikal-Schlittens 2 ausgeführt werden können, ohne daß die Übertragungsrolle 32 an den Enden der Langlochführung 33a anschlägt. Durch eine geeignete Wahl des Abstandes a zwischen der Achse der Übertragungsrolle 31 und der Achse des Schwenklagers 29 einerseits und des Abstandes b zwischen der Achse der Übertragungsrolle 32 und der Achse des Schwenklagers 29 kann eine Übersetzung zwischen dem Hub c der Nockenscheibe 14 und damit auch des Stößels 22 einerseits und dem Förderhub d des Horizontal-Förder-Schlittens 7 festgelegt werden. Da der Hub c der Nockenscheibe 14 auch gleich dem vertikalen Hub e des Vertikal-Schlittens 2 und damit des Horizontal-Förder-Schlittens 7 ist, kann somit durch die Wahl des Übersetzungsverhältnisses a/b auch das Verhältnis von e/d eingestellt werden. Es gilt: a/b = e/d. Der Winkel zwischen der als x-Richtung definierten Bewegungsrichtung des Stößels 22 und der als y-Richtung definierten Hubrichtung des Vertikal-Schlittens 2 beträgt 90°.

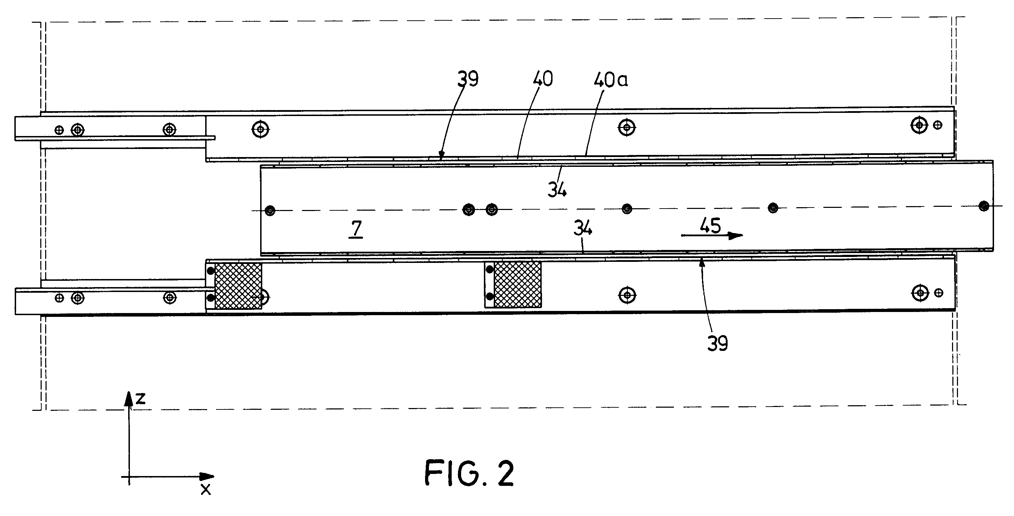

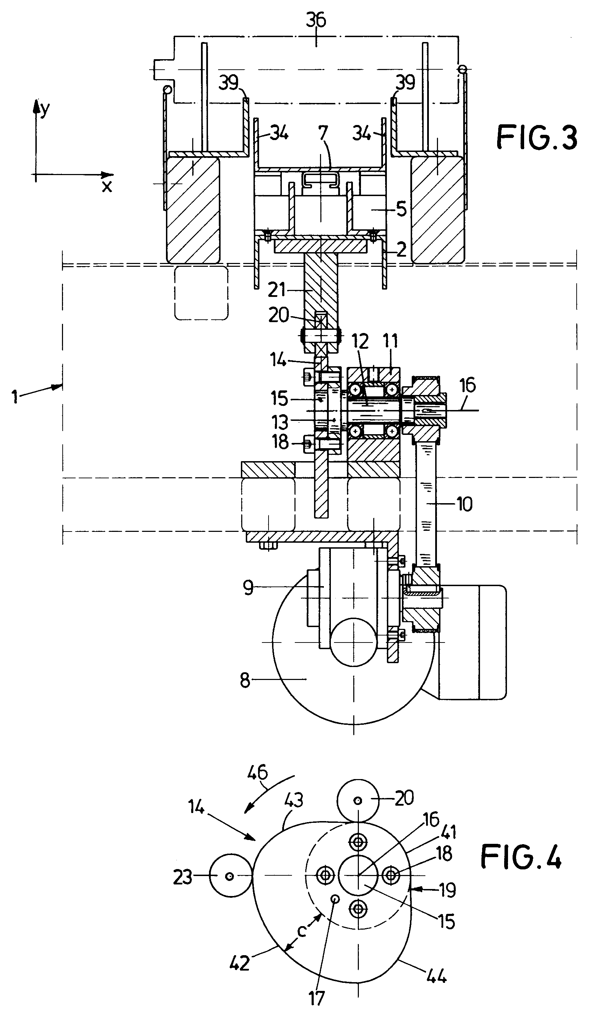

Wie den Fig. 2 und 3 entnehmbar ist, weist der Vertikal-Schlitten 2 zwei im Abstand voneinander angeordnete, rechenartig ausgebildete Seitenwangen 34 auf, die mit Ausnehmungen 35 in gleichmäßiger Größe und mit identischem Mittenabstand f voneinander versehen sind. Der Mittenabstand f zweier benachbarter Ausnehmungen 35, der auch als die Teilung bezeichnet werden kann, ist identisch dem Förderhub d in x-Richtung. Die Ausnehmungen 35 sind so ausgebildet, daß sie zur Aufnahme von Kartuschen 36 geeignet sind. Die Ausnehmungen 35 weisen hierzu eine Erstreckung g in x-Richtung auf, die geringfügig größer ist als der Durchmesser h der Kartuschen 36. Das Maß g entspricht also dem Abstand der die Ausnehmungen 35 in x-Richtung begrenzenden Mitnehmerstege 37. Die Ausnehmungen 35 werden durch einen Grund 38 nach unten begrenzt.

Beiderseits der Seitenwangen 34 des Vertikal-Schlittens 2 sind als Seitenführungen für den Vertikal-Schlitten 2 dienende stegartige Auflagen 39 angeordnet, die mit Positionier-Ausnehmungen 40 für die Kartuschen 36 versehen sind. Zwischen jeweils zwei benachbarten Positionier-Ausnehmungen 40 wird die Oberseite der Auflagen 39 durch geradlinige Zwischenabschnitte 40a definiert. Die Positionier-Ausnehmungen 40 weisen ebenfalls einen Mittenabstand f auf und sind derart angeordnet, daß sie vertikal mit den Ausnehmungen 35 und den Seitenwangen 34 des Vertikal-Schlittens 2 fluchten, wenn dieser sich in einer seiner beiden Endstellungen befindet. Der maximale vertikale Abstand i des Grundes 38 der Ausnehmungen 35 in der unteren Stellung des Vertikal-Schlittens 2 von den Zwischenabschnitten 40a der Auflagen 39 ist größer als der vertikale Hub e des Vertikal-Schlittens 2, so daß die Kartuschen 36 nicht von den Auflagen 39 abgehoben werden können. Die Kartuschen 36 werden liegend, also in horizontaler Lage, und zwar in z-Richtung liegend, in x-Richtung schrittweise transportiert. Sie liegen hierbei nicht auf dem Grund 38 der Ausnehmungen 35 auf und liegen angenähert spielfrei zwischen zwei benachbarten Mitnehmerstegen 37. Sie werden vom jeweiligen Mitnehmersteg 37 jeweils aus einer Ausnehmung 40 über den Zwischenabschnitt 40a in die benachbarte Ausnehmung 40 geschoben.

Wie aus Fig. 4 hervorgeht, weist die Nockenscheibe 14 vier Umfangsabschnitte auf. Sie weist einen inneren Viertel-Kreisabschnitt 41 auf, der sich über 90° erstreckt. Diametral hierzu weist sie einen äußeren Viertel-Kreisabschnitt 42 auf, der sich ebenfalls über 90° erstreckt. Die beiden Viertel-Kreisabschnitte 41 und 42 sind mit zwei Nockenflanken 43, 44 miteinander verbunden, die sich jeweils ebenfalls über 90° erstrecken.

Die Hub- und Förderbewegung des Vertikal-Schlittens 2 einerseits und des Horizontal-Förder-Schlittens 7 wird nachfolgend unter Bezugnahme auf die Umlaufbewegung der Nockenscheibe 14 beschrieben:

In der in der Fig. 1 und 4 dargestellten Ausgangsstellung befindet sich der Vertikal-Schlitten 2 in seiner unteren Endlage, der Horizontal-Förder-Schlitten 7 befindet sich in seiner in x-Richtung am weitesten in der Transportrichtung 45 verschobenen Stellung. Die Nockenscheibe 14 dreht sich in Drehrichtung 46 entgegen dem Uhrzeigersinn. Bei einer ersten Vierteldrehung der Nockenscheibe 14 aus der in Fig. 1 dargestellten Stellung heraus bewegt sich die Rolle 20 des Vertikal-Schlittens 2 auf dem inneren Viertel-Kreisabschnitt 41, d.h. der Vertikal-Schlitten 2 verbleibt in seiner unteren Endlage. Die Rolle 23 des Stößels 22 wird über die vom äußeren Viertel-Kreisabschnitt 42 zum inneren Viertel-Kreisabschnitt 41 führende Nockenflanke 43 geführt, d.h. der Stößel 22 wird durch die Rückstellfeder 27 in x-Richtung bewegt, so daß der Horizontal-Förder-Schlitten 7 in seiner unteren, in Fig. 1 dargestellten Lage entgegen der Transportrichtung 45 um einen Förderhub d bewegt wird. Im Verlaufe der nächsten (zweiten) Vierteldrehung der Nockenscheibe 14 rollt die Rolle 20 über die den inneren Viertel-Kreisabschnitt 41 mit dem äußeren Viertel-Kreisabschnitt 42 verbindende Nockenflanke 44 ab, d.h. der Vertikal-Schlitten 2 wird um den vertikalen Hub e angehoben. Hierbei werden die auf der Auflage 39 aufliegenden Kartuschen 36 von den Ausnehmungen 35 aufgenommen, so daß sie von den Mitnehmerstegen 37 in eine benachbarte Positionier-Ausnehmung 40 verschoben werden. Da während dieser Vierteldrehung der Nockenscheibe 14 die Rolle 23 des Stößels 22 über den inneren Viertel-Kreisabschnitt 41 der Nockenscheibe 14 abrollt, verbleibt der Horizontal-Förder-Schlitten 7 während dieser Vertikalbewegung des Vertikal-Schlittens 2 in Ruhe. Bei der anschließenden dritten Vierteldrehung der Nockenscheibe 14 wird die Rolle 20 des Vertikal-Schlittens 2 über den äußeren Viertel- Kreisabschnitt 42 geführt, d.h. der Vertikal-Schlitten 2 und damit der Horizontal-Förder-Schlitten 7 verbleibt in der oberen Stellung. Gleichzeitig wird die Rolle 23 des Stößels 22 über die den inneren Viertel-Kreisabschnitt 41 mit dem äußeren Viertel-Kreisabschnitt 42 verbindende Nockenflanke 44 geführt, d.h. der Stößel 22 wird gegen die Kraft der Rückstellfeder 27 ausgelenkt. Hierdurch wird der Horizontal-Förder-Schlitten 7 entgegengesetzt zur Bewegungsrichtung des Stößels 22 in Transportrichtung 45 um einen Förderhub d bewegt und nimmt hierbei die Kartuschen 36 um den Förderhub d in Transportrichtung 45 mit. Im Anschluß daran bewegt sich bei der nächsten (vierten) Vierteldrehung der Nockenscheibe 14 die Rolle 20 über die den äußeren Viertel-Kreisabschnitt 42 mit dem inneren Viertel-Kreisabschnitt 41 verbindende Nockenflanke 43, d.h. der Vertikal-Schlitten 2 wird durch sein Eigengewicht vertikal nach unten geführt. Da sich die Rolle 23 des Stößels 22 während dieser Vierteldrehung der Nockenscheibe 14 auf dem äußeren Viertel-Kreisabschnitt 42 bewegt, verbleibt der Horizontal-Förder-Schlitten 7 in seiner Ruhelage. Bei der vertikalen Abwärtsbewegung des Vertikal-Schlitten 2 werden daher die Seitenwangen 34 so weit nach unten weggefahren, daß ihre Mitnehmerstege 37 sich unterhalb der Positionier-Ausnehmungen 40 und damit unterhalb der Kartuschen 36 befinden, so daß sie anschließend unterhalb der Kartuschen 36 bei der nächsten (ersten) Vierteldrehung der Nockenscheibe 14 wieder zurückverfahren werden können.

Die geschilderten Bewegungen bewirken eine Rechteckbewegung des Horizontal-Förder-Schlittens 7. Die Gestaltung der Nockenflanken 43, 44 ist derart, daß jeweils an den Endpunkten der Bewegungen eine stetige Abbremsung stattfindet, so daß die Kartuschen 36 in vertikaler und in horizontaler Richtung stetig beschleunigt und abgebremst werden. Es erfolgt also keine abrupte Beschleunigung oder insbesondere Bewegungsumkehr, die dazu führen könnte, daß sie auf den Auflagen 39 eine Fehlposition einnehmen oder aber nach dem Absetzen nicht ruhig liegen.

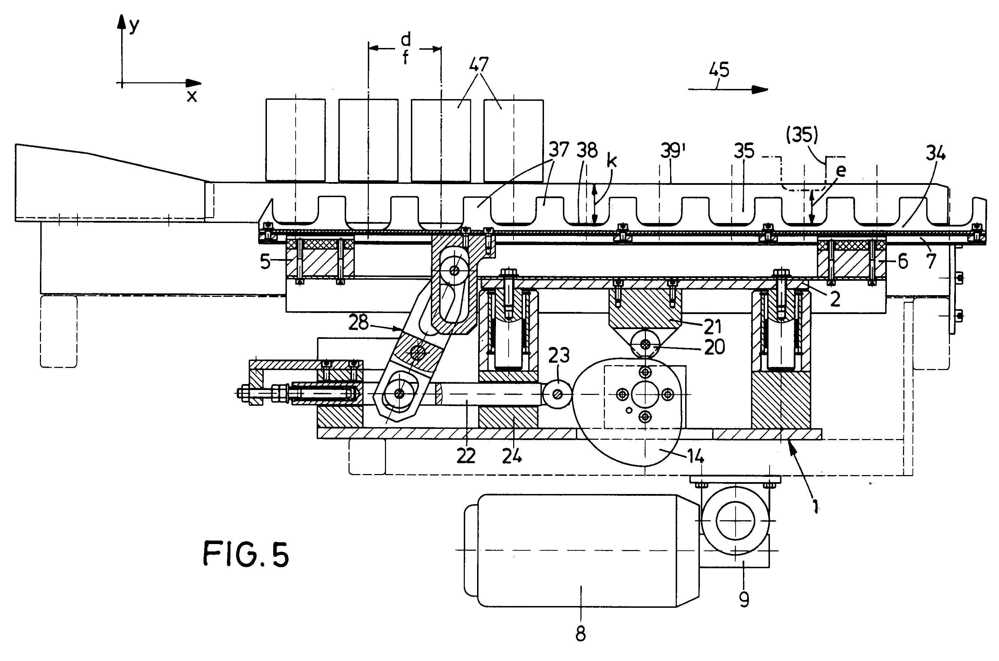

In Fig. 5 ist angedeutet, wie mit der geschilderten Fördervorrichtung stehende Behälter, beispielsweise mit flüssigem Material zu füllende Dosen 47 transportiert werden können. Die Auflagen 39' sind in diesem Fall als glatte Schienen ausgebildet. Ihr Abstand k vom Grund 38 der Ausnehmungen 35 ist etwas größer als der vertikale Hub e mit der Konsequenz, daß die Dosen 47 beim Vertikalhub des Horizontal-Förder-Schlittens 7 nach oben nicht von den Auflagen 39' abgehoben werden. Jeweils zwei Mitnehmerstege 37 ergreifen die jeweilige Dose 47 und verschieben sie auf den Auflagen 39' in Transportrichtung 45. Die Abmessungen der Auflagen 39' und der Seitenwangen 34 und der Mitnehmerstege 37 müssen selbstverständlich der Größe der Dosen 47 angepaßt werden.

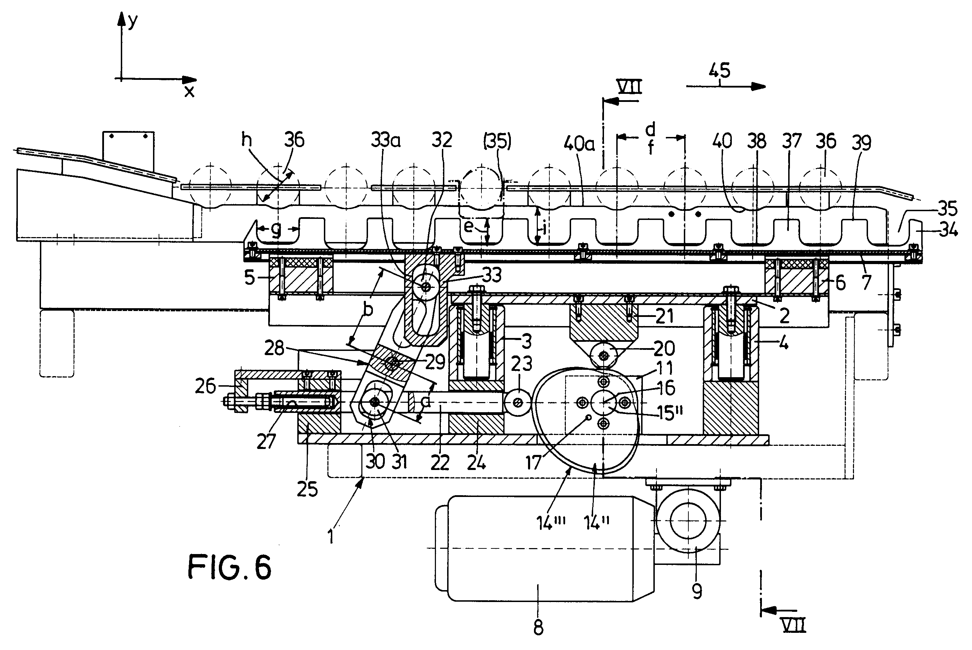

Die Fördervorrichtung nach den Fig. 6 bis 8 unterscheidet sich von der Fördervorrichtung nach den Fig. 1 bis 4 dadurch, daß nicht nur eine Nockenscheibe, sondern zwei Nockenscheiben vorhanden sind. Insoweit als die Fördervorrichtungen identisch sind, sind in den Figuren 6 bis 8 dieselben Bezugszeichen wie in den Fig. 1 bis 4 verwendet worden; es bedarf insoweit keiner erneuten Beschreibung.

Auf dem an der Antriebswelle 12 befestigten Flansch 13 sind zwei Nockenscheiben 14" und 14''' mittels eines Zentrierzapfens 15" zur Drehachse 16 der Antriebswelle 12 zentriert. Die eigentliche Befestigung am Flansch 13 erfolgt mittels Schrauben 18", die beide Nockenscheiben 14" und 14''' durchsetzen. Am Umfang 19" der Nockenscheibe 14" liegt die Rolle 20 an, die in dem Lager 21 an der Unterseite des Vertikal-Schlittens 2 gelagert ist. Demzufolge bewegt sich auch bei dieser Fördervorrichtung der Vertikal-Schlitten 2 bei einer Umdrehung der Nockenscheibe 14" entsprechend dem Verlauf ihres Umfangs 19" einmal nach oben und wieder nach unten in die Ausgangsstellung zurück; die Bewegung erfolgt also auch hierbei in y-Richtung.

Gegen den Umfang 19''' der Nockenscheibe 14''' liegt die in dem Stößel 22 drehbar gelagerte Rolle 23 an. Die Rückstellfeder 27 kann bei diesem Ausführungsbeispiel und in gleicher Weise bei dem Ausführungsbeispiel nach den Fig. 1 bis 3 auch als pneumatische Feder ausgebildet sein.

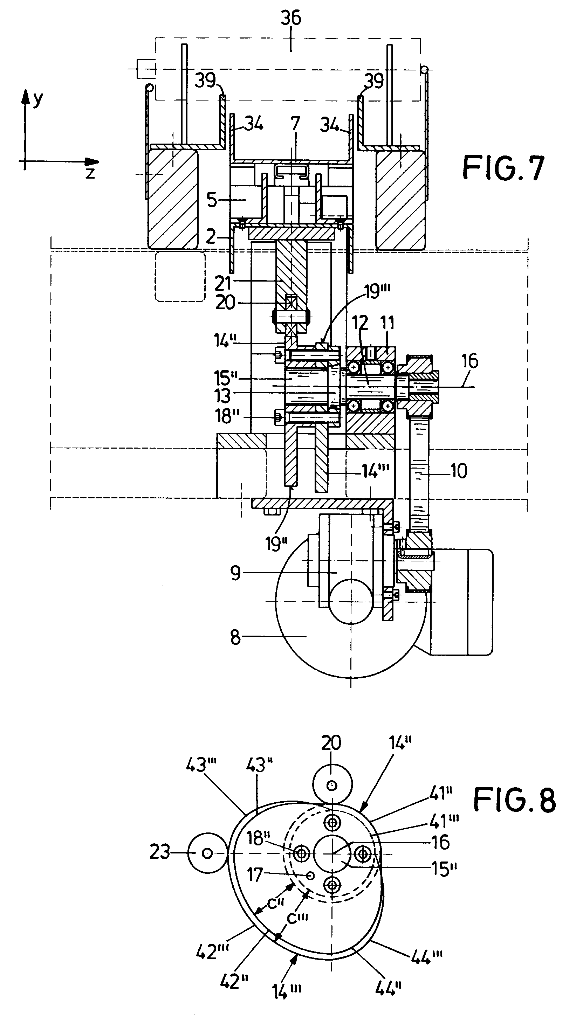

Wie aus Fig. 8 hervorgeht, weist die Nockenscheibe 14" vier Umfangsabschnitte auf. Sie weist einen inneren Viertel-Kreisabschnitt 41" auf, der sich über 90° erstreckt. Diametral hierzu weist sie einen äußeren Viertel-Kreisabschnitt 42" auf, der sich ebenfalls über 90° erstreckt. Die beiden Viertel-Kreisabschnitte 41" und 42" sind mit zwei Nockenflanken 43" und 44" miteinander verbunden, die sich jeweils ebenfalls über 90° erstrecken.

Für die Nockenscheibe 14''' gilt, daß sie einen inneren Viertel-Kreisabschnitt 41''' aufweist der sich über 90° erstreckt, dem ein sich ebenfalls über 90° erstreckender äußerer Viertel-Kreisabschnitt 42''' diametral gegenüberliegt. Auch diese beiden Viertel-Kreisabschnitte 41''' und 42''' sind mit sich jeweils über 90° erstreckenden Nockenflanken 43''' und 44''' miteinander verbunden.

Bei dieser Fördervorrichtung nach den Fig. 6 bis 8 kann das Verhältnis zwischen dem Förderhub d des Horizontal-Förder-Schlittens 7 und dem vertikalen Hub e des Vertikal-Schlittens 2 auch dadurch beeinflußt werden, daß der Hub c" der Nockenscheibe 14" unterschiedlich zum Hub c''' der Nockenscheibe 14''' ausgestaltet wird, wie es insbesondere aus der Fig. 8 hervorgeht. Im vorliegenden Fall ist der Hub c''' der Nockenscheibe 14''' deutlich größer als der Hub c" der Nockenscheibe 14". Dies bedeutet, daß der Hub c" der Rolle 20 des Vertikal-Schlittens 2 bei einer Umdrehung der Nockenscheibe 14" kleiner ist als der Hub c''' der Rolle 23.

Da die beiden Nockenscheiben 14" und 14''' fest miteinander gekoppelt sind und somit synchron umlaufen, ist die Hub- und Förderbewegung des Vertikal-Schlittens 2 einerseits und des Horizontal-Förder-Schlittens 7 andererseits in ihrem zeitlichen Verlauf gleich derjenigen bei der Fördervorrichtung nach den Fig. 1 bis 4.

**Patentansprüche**

1. Fördervorrichtung zum taktweisen Transport von Behältern mit
   - einem Gestell (1),
   - mindestens einer gestellfesten Auflage (39, 39') für die Behälter (36, 47),

- einem horizontal und vertikal bewegbaren, mit Mitnehmern (37) für die Behälter (36, 47) versehenen Horizontal-Förder-Schlitten (7),
- einem Antrieb zur schrittweisen Bewegung des Horizontal-Förder-Schlittens (7) auf einer Rechteck-Bahn,

gekennzeichnet durch folgende Merkmale:

- mindestens eine drehantreibbare Nockenscheibe (14, 14", 14''') mit einem Umfang (19, 19", 19''') und einer Drehachse (16),
- ein am Umfang (19, 19") einer Nockenscheibe (14, 14") anliegender Vertikaltrieb für den Horizontal-Förder-Schlitten (7),
- ein am Umfang (19, 19''') einer Nockenscheibe (14''') anliegender, um 90° gegenüber dem Vertikaltrieb versetzt angeordneter Horizontaltrieb für den Horizontal-Förder-Schlitten (7).

2. Fördervorrichtung nach Anspruch 1, dadurch gekennzeichnet, daß der Vertikaltrieb einen den Horizontal-Förder-Schlitten (7) tragenden, vertikal verschiebbar gelagerten Vertikal-Schlitten (2) aufweist, der gegen den Umfang (19, 19") einer Nockenscheibe (14, 14") abgestützt ist.

3. Fördervorrichtung nach Anspruch 1, dadurch gekennzeichnet, daß der Horizontaltrieb einen horizontal verschiebbar gelagerten, gegen den Umfang (19, 19''') einer Nockenscheibe (14, 14''') abgestützten Stößel (22) aufweist, der mittels eines Lenkers (Doppelhebel 28) mit dem Horizontal-Förder-Schlitten (7) gekoppelt ist.

4. Fördervorrichtung nach Anspruch 3, dadurch gekennzeichnet, daß der Lenker als im Gestell (1) schwenkbar gelagerter Doppelhebel (28) ausgebildet ist, dessen eines Ende mit dem Stößel (22) und dessen anderes Ende mit dem Horizontal-Förder-Schlitten (7) gekoppelt ist.

5. Fördervorrichtung nach Anspruch 3, dadurch gekennzeichnet, daß der Stößel (22) mittels einer Rückstellfeder (27) gegen den Umfang (19, 19''') einer Nockenscheibe (14, 14''') gedrückt ist.

6. Fördervorrichtung nach Anspruch 2, dadurch gekennzeichnet, daß der Horizontal-Förder-Schlitten (7) mit seiner Gewichtskraft gegen den Umfang (19, 19") einer Nockenscheibe (14, 14") abgestützt ist.

7. Fördervorrichtung nach Anspruch 4, dadurch gekennzeichnet, daß der Doppelhebel (28) mittels Langlochführungen (30 bzw. 33a) mit dem Stößel (22) bzw. dem Horizontal-Förder-Schlitten (7) gekoppelt ist.

8. Fördervorrichtung nach einem der Ansprüche 1 bis 7, dadurch gekennzeichnet, daß die mindestens eine Nockenscheibe (14, 14", 14''') zwei einander diametral gegenüberliegende, sich jeweils über 90° erstreckende Viertel-Kreisabschnitte (41, 42; 41", 42"; 41''', 42''') unterschiedlichen Abstandes von der Drehachse (16) und zwei diese Viertel-Kreisabschnitte (41, 42; 41", 42"; 41''', 42''') verbindende Nockenflanken (43, 44; 43", 44"; 43''', 44''') aufweist, die gemeinsam einen Umfang (19, 19", 19''') bilden, an dem der Vertikaltrieb und der Horizontaltrieb anliegen.

9. Fördervorrichtung nach einem der Ansprüche 1 bis 8, dadurch gekennzeichnet, daß nur eine Nockenscheibe (14) vorgesehen ist.

10. Fördervorrichtung nach einem der Ansprüche 1 bis 8, dadurch gekennzeichnet, daß für den Vertikaltrieb eine Nockenscheibe (14") und für den Horizontaltrieb eine hiervon gesonderte Nockenscheibe (14''') vorgesehen ist, wobei die Nockenscheiben (14", 14''') mechanisch starr miteinander gekoppelt sind.

FIG.1

FIG. 2

FIG.3

FIG.4

FIG.5

EP 0 685 396 A1

FIG.6

EP 0 685 396 A1

FIG.7

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 151 907 (MOORFEED) <br> * Spalte 2, Zeile 32 - Zeile 57; Abbildung 3 * <br> --- | 1,2,8,9 | B65B43/48 <br> B65G25/02 |
| X | EP-A-0 068 602 (ANDERSON-COOK) <br> * Zusammenfassung * <br> * Seite 9, Zeile 10 - Seite 12, Zeile 23; Abbildungen 2,8 * <br> ----- | 1,2,10 | |

**RECHERCHIERTE SACHGEBIETE (Int.Cl.6)**

B65B
B65G

Der vorliegende Recherchenbericht wurde für alle Patentansprüche erstellt

| Recherchenort | Abschlußdatum der Recherche | Prüfer |
|---|---|---|
| DEN HAAG | 27.September 1995 | Claeys, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

                     

& : Mitglied der gleichen Patentfamilie, übereinstimmendes Dokument